# EUROPEAN PATENT SPECIFICATION

(11) **EP 3 939 723 B1**
(45) Date of publication and mention of the grant of the patent: **01.11.2023**
(21) Application number: 20186277.8
(22) Date of filing: 16.07.2020
(51) Int. Cl.: B23B 27/04, B23B 29/04

(54) **TURNING TOOL**
DREHWERKZEUG
OUTIL DE TOURNAGE

(43) Date of publication of application: 19.01.2022
(73) Proprietor: WALTER AG, 72072 Tübingen (DE)
(72) Inventor: WÜTZ, Michael, 72072 Tübingen (DE)
(74) Representative: Sandvik

(56) References cited:
- EP-A1- 2 208 562
- EP-B1- 2 208 562
- WO-A2-2007/100907
- DE-A1-102011 080 379
- DE-U1-202019 103 472

## Description

### Technical field

The present invention relates to a turning tool assembly for metal cutting comprising a cutting insert carrier, a holder and a clamping mechanism, according to the preamble of claim 1, configured to removably secure the carrier body to the holder Such a turning tool assembly is known from EP 0 300 544.

### Background

EP 0 300 544 discloses a grooving tool comprising a shank and a blade-shaped cutter carrier, which is exchangeable connected to the shaft by means of screws. In order to secure the carrier on the shaft, the carrier is placed on the shaft and the screws are tightened. The screws force the carrier against planer contact faces in the shaft whereby the carrier is positioned relative the shaft.

A problem with this known grooving tool is that it is difficult and time consuming to attach the cutter carrier to the shaft in an exactly intended position, especially in machines where access is limited.

### Summary

It is an object of the present invention to provide a turning tool assembly where positioning of a cutting insert carrier at holder is facilitated. This object is achieved according to the invention by means of a turning tool assembly as defined in claim 1.

An inventive turning tool assembly for metal cutting comprises
- a cutting insert carrier comprising a carrier body, which has
   - a longitudinal extension from a front end to a rear end, and a cutting insert seat at the front end,
   - a carrier body lateral side, which extends longitudinally forward from a rear end thereof, and
   - a carrier support structure arranged in the carrier body lateral side at a rear end thereof,
- a holder comprising a holder body which has
   - a holder body primary side, which faces and extends longitudinally alongside a portion of the carrier body lateral side, wherein the holder body primary side has a front end and extends longitudinally rearward therefrom,
   - a holder support structure arranged in the holder primary side at a front end thereof, and
- a clamping mechanism,
   wherein
- the carrier support structure comprises
   - a contact surface, which faces laterally outward from the carrier body lateral side, and has an extension in the longitudinal direction and in a height direction,
   - positioning surfaces, which each extend at an angle to the contact surface, and which
      - include a carrier pair of height support surfaces facing in opposite height directions,
- the holder support structure comprises
   - a contact surface, which faces outward from the holder body primary side and has an extension in the longitudinal direction and in the height direction, wherein the contact surface of the holder support structure is aligned with and faces the contact surface of the carrier support structure,
   - positioning surfaces, which each extend at an angle to the contact surface, and which
      - include a holder pair of height support surfaces facing in opposite height directions, wherein each of the height support surfaces of the holder pair cooperate with and face a respective one of the height support surfaces of the carrier pair,
- the clamping mechanism is configured to removably secure the carrier body to the holder body by forcing the contact surface of the carrier support structure against the contact surface of the holder support structure, whereby the carrier body is guided toward a clamping position by the positioning surfaces of the carrier support structure abutting and sliding against the positioning surfaces of the holder support structure,
- the positioning surfaces of the carrier support structure further include a carrier pair of longitude support surfaces facing in opposite longitudinal directions,
- the positioning surfaces of the holder support structure further include a holder pair of longitude support surfaces facing in opposite longitudinal directions, wherein each of the longitude support surfaces of the holder pair cooperate with and face a respective one of the longitude support surfaces of the carrier pair,
- one of the height support surfaces of the carrier pair or the holder pair is located on a resilient height member of the corresponding support structure, whereby the angle and/or position of that height support surface is adjustable by the height member yielding resiliently, and wherein
- one of the longitude support surfaces of the carrier pair or the holder pair is located on a resilient longitude member of the corresponding support structure, whereby the angle and/or position of that longitude support surface is adjustable by the longitude member yielding resiliently.

Thus, the inventive assembly comprises carrier pairs of positioning surfaces that cooperate with holder pairs of positioning surfaces, which, together with cooperating contact surfaces, define an exact clamping position for the carrier at the shaft in all three dimensions. The inventive assembly thus comprises support surfaces in both longitudinal directions and both height directions. Furthermore, due to that at least one of the positioning surfaces for longitudinal positioning and at least one of the positioning surfaces for height positioning is located on a resiliently yielding member, the carrier is biased toward the position and too high demands on tolerances of the positioning surfaces is avoided. In contrast to prior art tools, which comprise several screws that need to be tightened in a certain order to push the carrier toward support surfaces in a shaft, in the inventive tool assembly, the positioning surfaces guide the carrier toward the intended clamping position in response to a general clamping force. Consequently, a more reliable positioning of the carrier at the holder can be achieved with a simpler clamping procedure.

The turning tool assembly according to the present invention is suitable for metal cutting. Typically, the work piece is rotated and a cutting insert mounted on the turning tool is moved towards the axis of rotation to cut chips from the rotating work piece. In some operations, the turning tool assembly is operated to in addition move also along other axes, such as for example along the rotation axis of the work piece.

The turning tool assembly according to the present invention comprises a cutting insert carrier, a holder and a clamping mechanism for securing the carrier at the holder. Thus, the carrier is connectable to and disconnectable from the holder.

The carrier is generally to be understood as a component suitable for holding a cutting inset, for example a tool head, a cartridge or a blade. Blades are often used in turning operations such as parting and grooving. The carrier comprises a body which is provided with a cutting insert seat in a front end for receiving a cutting insert therein such that a cutting edge thereof is exposed. The cutting insert can be secured in any suitable way, for example by a clamp or one or several fastening screws or pins.

In the carrier, a direction rearwards from the insert seat at a front end to a rear end of the carrier body is defined as a longitudinal direction. This direction can be, but need not be, the longest direction of the carrier.

The carrier body has a lateral side that extends longitudinally forward from the rear end thereof. When the carrier is secured at the holder, the lateral side faces the holder and a direction laterally outward from the carrier lateral side is toward the holder.

A direction that is perpendicular to both the longitudinal direction and the lateral outward direction of the carrier, is defined as a height direction.

The holder is generally to be understood as a component holding the insert carrier, such as for example a shaft or an adapter. The holder is suitably configured to hold the carrier in one end and to be connectable to a machine tool, or an adapter therefore, in another end. The holder comprises a body which has a primary side. When the carrier is secured at the holder, the holder body primary side faces and extends alongside the carrier body lateral side. The holder primary side extends rearwards from a front end thereof, which rearward direction is defined as the longitudinal direction.

In an embodiment, the carrier is mounted at the holder at a long side of the holder, wherein the holder primary side is a lateral side of the holder. In another embodiment, the carrier is instead mounted across a front side of the holder, wherein the holder primary side is a front side and the longitudinal direction is a direction transverse the holder. Thus, the longitudinal direction can be, but need not be, the longest direction of the holder.

When the carrier is secured to the holder, the lateral direction of the holder is a direction generally perpendicular to the holder primary side and a direction laterally outward from holder primary side is toward the carrier lateral side.

A direction that is perpendicular to both the longitudinal direction and the lateral direction of the holder, is defined as a height direction.

When the carrier is secured at the holder, the longitudinal direction, the lateral direction and the height direction are the same for both components and also for the assembly. During operation, the height direction can be, but need not be, a vertical direction. Preferably, the lateral direction corresponds to a direction of a clamping force that secures the carrier to the holder.

A carrier support structure is arranged in the lateral side of the carrier and a holder support structure is arranged in the primary side of the holder. Optionally, the carrier comprises a section including the support structure and a section including the insert seat. The section with the insert seat is longitudinally in front of the section with the support structure. Preferably, the carrier support structure is arranged at a rear end of the lateral side, and the holder support structure is arranged at a front end of the primary side. Thereby, when the carrier is positioned in the clamping position at the holder, a portion of the section of the carrier with cutting insert seat, or at least a cutting edge of a cutting insert mounted therein, can protrude beyond the holder. According to an embodiment, a cutting edge of a cutting insert mounted in the carrier extends generally in the lateral direction.

The carrier support structure and the holder support structure are designed to mate and to guide the carrier towards a desired, clamping position in the holder, and to securely support the carrier in that desired, secure position.

The carrier support structure and the holder support structure each comprise a contact surface and positioning surfaces including two pairs of support surfaces. One or several of the surfaces can be a single surface or be comprised of several part surfaces. The surfaces may have any suitable extension and curvature. Preferably, one or several of the surfaces are planar. Planar surfaces are easier to machine to required tolerances for ensuring the desired mutual contact and cooperation.

The height support surfaces guide the carrier to the intended clamping position at the holder in the height direction, and provide support to the carrier in the height direction in that secure position. The longitude support surfaces guide the carrier to the intended clamping position at the holder in the longitudinal direction, and provide support to the carrier in the longitudinal direction in that secure position. The contact surfaces determine the clamping position of the carrier in the lateral direction. Preferably, the contact surfaces are parallel when the carrier is secured to the holder. Preferably, the contact surfaces have a main extension in a plane that is normal to the lateral direction, and the height and longitude support surfaces protrude laterally outward or inward from and at an angle to their respective contact surface. Preferably, the height support surfaces have a main extension in the longitudinal direction, and the longitude support surfaces in the height direction.

The support surfaces are arranged in pairs. The holder and the carrier each have one pair of height support surfaces and one pair of longitude support surfaces. Each support surface of the holder cooperates with a support surface at the carrier.

Optionally, the support surfaces border the contact surface, extend at a distance thereto, or possibly across the contact surface. According to an embodiment, the support surfaces of each of the pairs are located at opposite sides of their respective contact surface. Thus, a pair of support surfaces can be located on opposite sides of their contact surface and face in opposite directions, wherein both face either toward or away from the contact surface. Thereby, the contact surface advantageously is centrally located in each support structure. Furthermore, cooperating sets of support surfaces are distanced from each other at least by the extension of the contact surface. A large distance between support surfaces is advantageous for providing support against torque and thereby better prevent the carrier from rotating at the holder.

According to an embodiment, at least one of the height support surfaces of the carrier pair and the therewith cooperating height support surface of the holder pair are immovably arranged in their respective support structure, and at least one of the longitude support surfaces of the carrier pair and the therewith cooperating longitude support surface of the holder pair are immovably arranged in their respective support structure. Thereby at least one set of cooperating height support surfaces are fixed in their respective component, and at least one set of cooperating longitude support surfaces are fixed in their respective component. This is advantageous in that the position of the carrier at the holder is determined by these fixed surfaces. The resilient members can, with their support surfaces, urge the carrier and the holder together and toward a position in which the fixed surfaces engage.

Preferably, the contact surfaces of the carrier support and the holder support are immovably arranged in their respective support structure. Thereby, immovable, fixed support surfaces are fixed in relation to immovable, fixed contact surfaces.

According to an embodiment, only one of the height support surfaces of the carrier pair or the holder pair is located on a resilient height member of the corresponding support structure, and only one of the longitude support surfaces of the carrier pair or the holder pair is located on a resilient longitude member of the corresponding support structure. Thus, only one of all height support surfaces and only one of all longitude support surfaces are located on a resilient member. Thereby, a more rigid clamping can be achieved and the intended clamping position of the carrier at the holder is easier defined.

At least one of the height support surfaces and at least one of the longitude support surfaces are located on a resilient member. The resilient member is configured to yield such that the support surface tilts and/or moves in response to a clamping force. Preferably, the resilient member yields by flexing such the support surface located thereon tilts or is bends. Thereby, the angle and/or the curvature of the support surface changes. Optionally, the surface is instead or in addition pushed back linearly. Due to the angle and/or position of the support surface changing, the angle and/or position of the surface is adjustable such that the carrier and the holder properly fit when clamped and secured together. Preferably, the resilient members are caused to yield by a clamping force pushing the cooperating support surfaces against each other. Advantageously, the adjusted angle compensates for tolerances and provides pretension of the carrier toward the desired, clamping position at the holder.

According to an embodiment with planar surfaces, a normal to a support surface on a resilient member forms a first angle with a normal to the contact surface of the same support structure when the carrier and the holder are detached, and a second angle when the carrier and the holder are subjected to a clamping force and secured to each other. The difference between such angles is for example 2 - 6°.

Preferably, the resilient member is integral with the corresponding component and connected therewith in a weakened portion, for example in form of a living hinge. Such a resilient member is per se stiff but flexible around the hinge. An advantage with this embodiment of the resilient member is that it is efficient to manufacture together with the carrier and that the support and guidance provided therewith is easier predictable. According to an embodiment, the resilient member is a cantilever beam that is integral and in one piece with the corresponding component, and pivotably connected therewith along a long side thereof through a living hinge. Preferably, such living hinge is formed by a weakened, elastic portion.

Optionally, the resilient member is realised as a separate element that is pivotably and/or linearly movable connected to the corresponding component. For example, the resilient member comprises a separate, stiff element that is connected to the support structure by means of a spring or hinge. Such spring or hinge can for example comprise a thinner portion of the same material as the element, a block of a different, more elastic material, a coil spring or a leave spring.

Optionally, the resilient member is per se elastic so that the support surface thereof assumes a new angle or position by the member compressing or expanding below the surface.

Each support structure can comprises several height resilient members or several longitude resilient members. For example, in embodiments where one of the support surfaces that is located on the resilient member is comprised of several part surfaces, each part surface is located on a separate resilient member. In other such embodiments, some or all such part surfaces are located on the same resilient member.

According to an embodiment, the cantilever beam has a hook at the distal end, wherein the corresponding support surfaces is an inside surface of the hook. Preferably, the support surface, which is cooperating with the support surface that is the inside surface of the hook, is a side surface of a ridge in the thereto corresponding support structure, wherein the cantilever beam with the hook and the ridge together form a releasable snap-fit. Thanks to such snap-fit, an operator receives an indication when the carrier has reached the intended, clamping position at holder. Also, the carrier can be provisionally held at the holder.

According to an embodiment, each resilient member is in a relaxed state when the cutting insert carrier and the holder are disconnected, and in a stressed state when the cutting insert carrier and the holder are secured together. When the respective resilient member is in the stressed state, a contact point (P), which is located on the support surface of the respective resilient member and is in contact with a point on a respective cooperating support surface (36, 18), has been displaced a distance (D) of at least 0,05mm and at most 2mm from the relaxed state.

A shorter distance may not be enough for achieving the advantages of compensating for tolerances and providing pretension toward the intended secure position. A larger distance may in some embodiments be difficult to realize because of limitation in the size of the support structures. In an embodiment where the resilient member is a cantilever beam, the distance is at least 0,05mm and at most 0,6mm. Preferably, the distance is at least 0,15 mm and at most 0,35 mm.

The clamping mechanism is configured to removably secure the carrier body to the holder body. Thus, a carrier secured to the holder can be removed and replaced with a new, identical carrier or a carrier of a different kind. For example, instead of replacing a worn cutting insert, a new carrier with a new cutting insert can be provided.

Preferably, the clamping force is normal to the contact surface of the holder, and in embodiments with parallel contact surfaces, also to the contact surface of the carrier. Preferably, this normal direction is the lateral direction. The carrier is guided to the intended clamping position at the holder by the positioning surfaces of the carrier support structure abutting and sliding against the positioning surfaces of the holder support structure. Thus, the support surfaces have such an angle and extension that, a clamping force in one direction only, the lateral direction, causes the carrier to move perpendicular to the lateral direction, i.e. in the longitudinal and height direction. Thereby the clamping mechanism advantageously is easy to operate. In contrast, in many prior art devices, several screws are necessary in order to push a cutter carrier also in longitudinal and height directions towards support surfaces in a shaft.

According to a preferred embodiment, the clamping mechanism comprises a single clamping screw. Since an operator only has operate a single screw, exchange of carrier is fast without compromising an exact and secure position. However, the clamping mechanism can be of any suitable kind, such as comprising one or several screws, bolts and nuts, or clamps.

According to an embodiment comprising a single clamping screw, the holder body comprises a thorough hole that extends in a transverse direction, preferably the lateral direction, from an opening in an outer surface of the holder to an opening in the contact surface. The contact surface of the carrier support structure comprises a top portion and a bottom portion, which both extend in a longitudinal direction. The clamping mechanism further comprises a downwardly open top slot extending longitudinally forward from an open rear end and behind the top portion of the contact surface, an upwardly open bottom slot extending longitudinally forward from an open rear end and behind the bottom portion of the contact surface, and a T-nut slidingly arranged in the top slot and in the bottom slot. The clamping screw extends through the through hole and the opening, and into the T-nut for threadingly engaging therewith. This embodiment is advantageous in that the T-nut provides a large contact area for transferring forces from the screw to the carrier when clamping screw is rotated tightened. Another advantage with the T-nut is that the carrier body does not need to comprise threads, which are located inside the T-nut instead. Thereby, the carrier body can be made thinner.

According to an embodiment, when the clamping screw is in a loosened position inside the T-nut, the carrier body is operable to move forward, whereby the T-nut slides in the top slot and in the bottom slot. Thereby the carrier can be removed from the holder. For example, in order to exchange a carrier, an operator can loosen the clamping screw and pull the carrier out. Thus, the screw can still be in threaded engagement with the T-nut. This is advantageous in that no other components have to be removed from the turning tool assembly during exchange of carrier, which prevents any such components from getting lost. Another advantage is that the carrier can be provisionally held at the holder before being tightened. This is especially advantageous in case access to the turning tool assembly is limited or the carrier is to be attached to the holder from below.

According to an embodiment, the turning tool assembly comprises a cutting insert mounted in the insert seat of the cutting insert carrier.

### Brief description of the drawings

In the following, example embodiments will be described in greater detail and with reference to the accompanying drawings, in which:
Fig. 1 is a perspective view from above of the first embodiment of the turning tool assembly according to present invention;
Fig. 2 is an exploded perspective view of the first embodiment of the turning tool assembly;
Fig. 3 is an enlarged perspective view from above of a carrier of the first embodiment of the turning tool assembly;
Fig. 4 is an enlarged perspective view from below of a carrier of the first embodiment of the turning tool assembly;
Fig. 5 is an enlarged perspective view from above of the holder of the first embodiment of the turning tool assembly;
Fig. 6 is an enlarged, exploded perspective view from the holder toward the carrier of the first embodiment of the turning tool assembly;
Fig. 7 is an enlarged, exploded perspective view from the carrier toward the holder of the first embodiment of the turning tool assembly;
Fig. 8 is a cross sectional view along VIII - VIII of the first embodiment of the turning tool;
Fig. 9 is a cross sectional view along IX - IX of the first embodiment of the turning tool;
Figs. 10 - 12 are perspective views of the carrier and holder of the first embodiment, wherein cooperating contact surfaces and positioning surfaces are indicated;
Figs. 13a - 13d are schematic cross sectional views of cooperating height support surfaces, wherein the resilient height member is in a relaxed and in a stressed state;
Figs. 14a - 14d are schematic cross sectional views of cooperating longitude support surfaces, wherein the resilient longitude member is in a relaxed and in a stressed state.

All the figures are schematic, not necessarily to scale, and generally only show parts which are necessary in order to elucidate the respective embodiments, whereas other parts may be omitted or merely suggested. Unless otherwise indicated, like reference numerals refer to like or corresponding parts in different figures.

### Detailed description

With reference to the Figs., a first embodiment of a turning tool assembly according to the present invention will be described. The turning tool assembly of the first embodiment is an assembly for parting and grooving of metal workpieces, wherein the turning tool assembly comprises a holder 1 in form of a shaft, a cutting insert carrier 2 in form of a blade, and a clamping mechanism for securing the carrier 2 to the holder 1. The clamping mechanism includes a T-nut 3 and a clamping screw 4. In this first embodiment, a cutting insert 5 is mounted in an insert seat 6 in the carrier 2. The cutting insert 5 is removable and does not need to be present in other embodiments of the turning tool assembly, for example when the embodiments are not in operation to cut a workpiece.

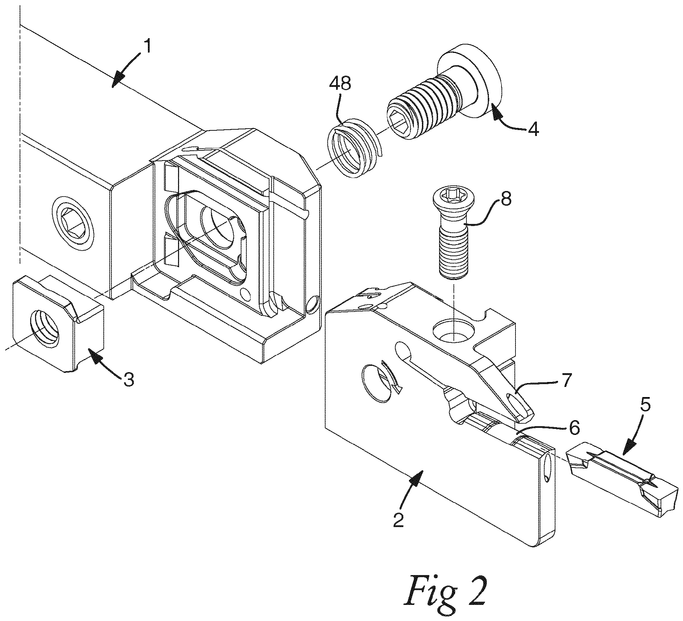

The carrier includes an integral fastening clamp 7 and a fastening screw 8 for securing the cutting insert 5 in the insert seat 6 with a cutting edge thereof exposed, c.f. Fig. 2.

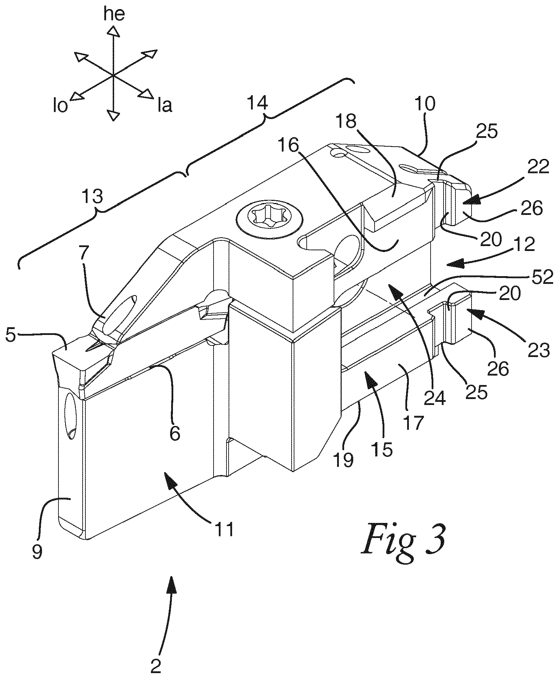

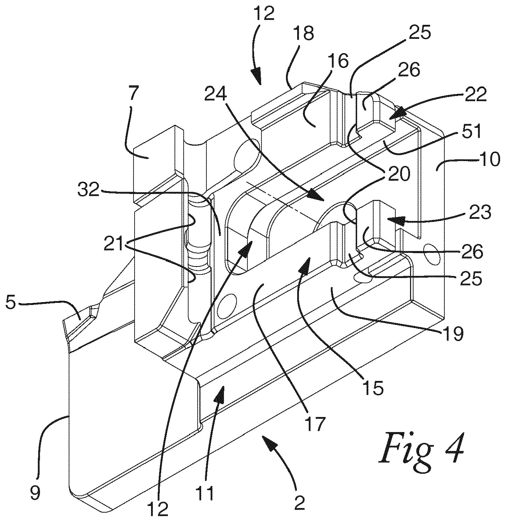

The carrier 2 is shown in enlarged, perspective views in Figs. 3 and 4. The carrier 2 comprises a carrier body, which has a front end 9, a rear end 10 and a carrier body lateral side 11. The carrier comprises a front section 13 and rear section 14. The front section comprises the clamp 7, the insert seat 6 and the cutting insert 5. The rear section comprises a carrier support structure 12. The carrier support structure 12 is arranged in the carrier body lateral side 11 at the rear end thereof.

When the carrier 2 is secured at the holder 1, the lateral side 11 faces the holder 1 and a direction outward from the carrier lateral side toward the holder 1 is defined as a lateral direction (la).

In the carrier 2, a direction rearwards from the insert seat 6 at the front end 9 to the rear end 10 is defined as a longitudinal direction (lo). In the first embodiment, this longitudinal direction (lo) is the longest direction of the carrier/blade 2.

In the carrier 2, a direction that is perpendicular to both the longitudinal direction (lo) and the lateral direction (la), is defined as a height direction (he).

The carrier support structure 12 comprises a contact surface 15, which faces laterally outward from the carrier body lateral side 11. The contact surface 15 is planar and situated in a plane that is normal to the lateral direction (la) so that it extends in the longitudinal direction (lo) and in the height direction (he).The contact surface 15 is immovably arranged in the carrier support structure 12. Thereby the contact surface 15 has the same fixed position and extension in the support structure 12 both when the carrier 2 is connected to and disconnected from the holder 1. The contact surface 15 of the carrier support structure is divided into a top portion 16 and a bottom portion 17 by a central recess 24 that extends forward from the rear end 10. The contact surface 15 further comprises a front portion 32 extending in the height direction at the front end of the support structure 12.

The carrier support structure 12 further comprises positioning surfaces in form of a pair of height support surfaces 18, 19 and a pair of longitude support surfaces 20, 21.

The pair of height support surfaces comprises a top carrier support surface 18 and a bottom carrier support surface 19, which are located at opposite sides of the contact surface 15, i.e. at a top side and at a bottom side, respectively. The height support surfaces 18, 19 face away from each other, wherein the top surface 18 faces upward and the bottom surface 19 faces downward. The top surface 18 extends laterally outward and the bottom surface 19 extends laterally inward relative the contact surface 15, wherein both surfaces are continuous surfaces. Both the top surface and the bottom surface 18,19 are immovably arranged in the carrier support structure 12, whereby they have the same, fixed position and extension in the support structure 12 both when the carrier 2 is connected to and disconnected from the holder 1. The bottom surface 19 forms an angle of about 90° with the contact surface 15 and has a main extension in the longitudinal direction (lo). Also the top surface 18 has a main extension in the longitudinal direction (lo).

The pair of longitude support surfaces comprises a rear carrier support surface 20 and a front carrier support surface 21, which are located at opposite sides of the contact surface 15, i.e. at a rear side and a front side, respectively. The longitude support surfaces 20, 21 face each other, wherein the front surface 21 faces rearward, and the rear surface 20 faces forward. The front surface 21 extends laterally outward in relation to the contact surface 15, wherein the front surface 21 faces toward the contact surface 15. The rear surface 20 extends laterally inward in relation to the contact surface 15. The longitude support surfaces 20, 21 have their main extension in the height direction (he).

The front surface 21 is immovably arranged in the carrier support structure 12, and has the same, fixed position and extension in the support structure 12 both when the carrier 2 is connected to and disconnected from the holder 1. The front surface 21 forms an angle of about 45° with the contact surface 15 and has a main extension in the height direction (he). The front surface 21 is divided into a top part surface and a bottom part surface.

The carrier support structure 12 further comprises two resilient longitude members in form of a top cantilever beam 22 and a bottom cantilever beam 23, which extends forward from the rear end 10 at an upper and a lower side of the recess 24, respectively. Each cantilever beam 22, 23 is connected to the support structure 12 in an elastic proximal forward end by a living hinge 25 around which they are laterally flexible. The living hinges 25 extend in the height direction (he). Both cantilever beams 22, 23 have a hook 26 in a distal end at the rear end 10. The rear surface 20 is divided into a top part surface and a bottom part surface which form an inside surface of one hook 26 each.

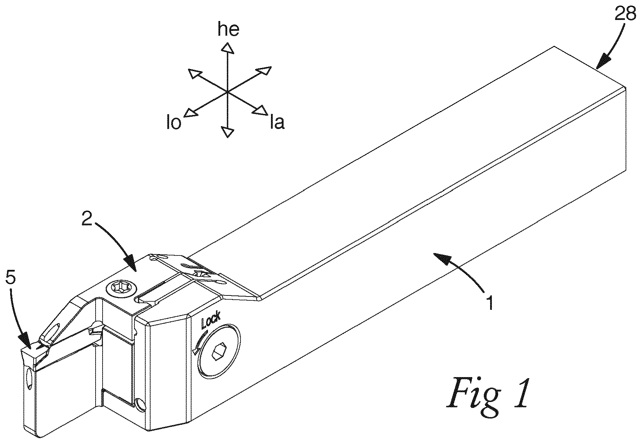

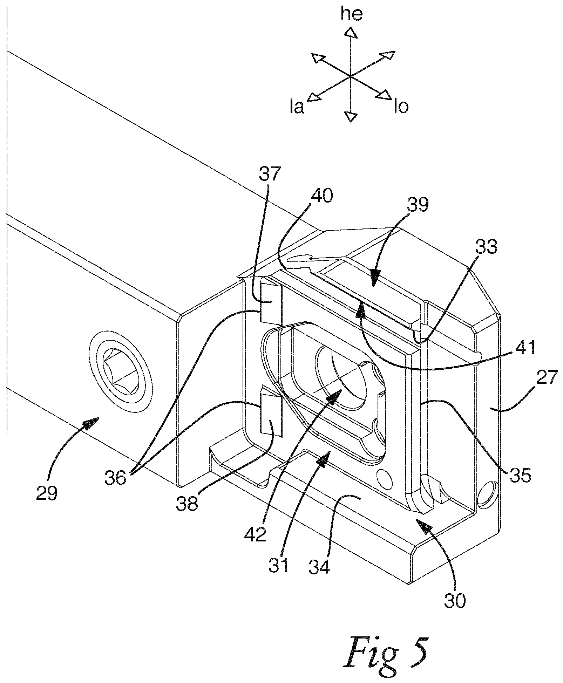

The holder 1 is shown in an enlarged, perspective view in Fig. 5. The holder 1 comprises a holder body, which has a front end 27, a rear end 28, c.f. Fig. 1, and a holder body primary side 29. A direction rearward from the front end 27 to the rear end 28 is defined as a longitudinal direction (lo). In the first embodiment, this longitudinal direction is the longest direction of the holder/shaft 1.

The holder 1 comprises a support structure 30 arranged in the holder body primary side 29 at the front end 27 thereof. When the carrier 2 is secured at the holder 1, the carrier body lateral side 11 and the holder body primary side 29 face each other in the lateral direction (la). A direction laterally outward from the holder primary side 29 is toward the carrier 2.

In the holder 1, a direction that is perpendicular to both the longitudinal direction (lo) and the lateral direction (la), is defined as a height direction (he).

The holder support structure 30 comprises a contact surface 31, which faces laterally (la) outward from the holder body primary side. The contact surface 31 is planar and situated in a plane that is normal to the lateral direction (la) so that it extends in the longitudinal direction (lo) and in the height direction (he).The contact surface 31 is immovably arranged in the holder support structure 30. Thereby the contact surface 31 has the same fixed position and extension in the support structure 30 both when the carrier 2 is connected to and disconnected from the holder 1. The contact surface 31 of the holder support structure 30 is a continuous, U-shaped surface, wherein the two legs extend longitudinally rearwards from a crossbar surface extending in the height direction (he) at the front end 27.

The holder support structure 30 further comprises positioning surfaces in form of a pair of height support surfaces 33, 34 and a pair of longitude support surfaces 35, 36.

The pair of longitude support surfaces comprises a rear holder support surface 36 and a front holder support surface 35, which are located at opposite sides of the contact surface 31, i.e. at a rear side and a front side, respectively. The longitude support surfaces 35, 36 face away from each other, wherein the front surface 35 faces forward, and the rear surface 36 faces rearward. The front surface 35 extends laterally inward in relation to the contact surface 31, wherein the front surface 35 is located in an undercut below the contact surface 31. The rear surface 36 extends laterally outward in relation to the contact surface 31.

The front surface 35 is immovably arranged in the holder support structure 30, and has the same, fixed position and extension in the support structure 30 both when the carrier 2 is connected to and disconnected from the holder 1. The front surface 35 forms an angle of about 45° with the contact surface 31 and has a main extension in the height direction (he). The front surface 31 is a continuous surface.

The holder support structure 30 further comprises ridges in form of a top ridge 37 and a bottom ridge 38, which extend in the height direction (he). The rear surface 36 is divided into a top part surface and a bottom part surface, which form a rear side of one ridge 37, 38 each. Each ridge 37, 38, and thus also the rear surface 36 located thereon, is immovably arranged in the holder support structure 30, and has the same, fixed position and extension in the support structure 30 both when the carrier 2 is connected to and disconnected from the holder 1.

The pair of height support surfaces comprises a top holder support surface 33 and a bottom holder support surface 34, which are located at opposite sides of the contact surface 31, i.e. at a top side and at a bottom side, respectively. The height support surfaces 33, 34 face each other, wherein the top surface 33 faces downward and the bottom surface 34 faces upward. The top surface 33 extends laterally inward and the bottom surface 34 extends laterally outward relative the contact surface 31.

The bottom surface 34 is immovably arranged in the holder support structure 30, and has the same, fixed position and extension in the support structure 30 both when the carrier 2 is connected to and disconnected from the holder 1. The bottom surface 34 forms an angle of about 90° with the contact surface 31 and has a main extension in the longitudinal direction (lo).

The holder support structure 30 further comprises a resilient height member in form of a height cantilever beam 39. The height cantilever beam 39 extends longitudinally at an upper side of the contact surface 31 and is connected to the holder support structure 30 at a proximal, lower long side. The proximal, lower side is elastic and forms a living hinge 40 around which the height cantilever beam 39 is laterally flexible. The height cantilever beam 39 has a laterally outward protruding flange 41 at a distal, upper long side. The top holder support surface 33 is a lower, downward facing surface on the flange 41.

Consequently, only one of the height support surfaces 18, 19, 33, 34 of the carrier pair or the holder pair is located on a resilient height member of the corresponding support structure, i.e. the top holder support surface 33. Furthermore, only one of the longitude support surfaces 20, 21, 35, 36 of the carrier pair or the holder pair is located on a resilient longitude member of the corresponding support structure, i.e. the rear carrier support surface 20. All other support surfaces 18, 19, 34, 21, 35, 36 are immovable and fixed relative their respective support structure.

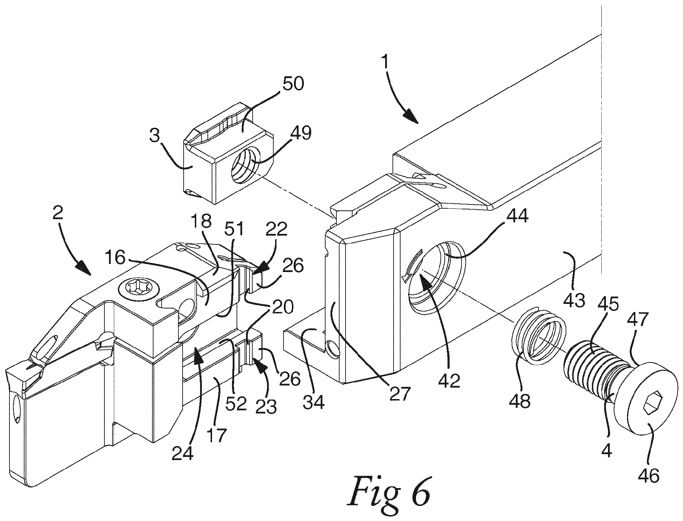

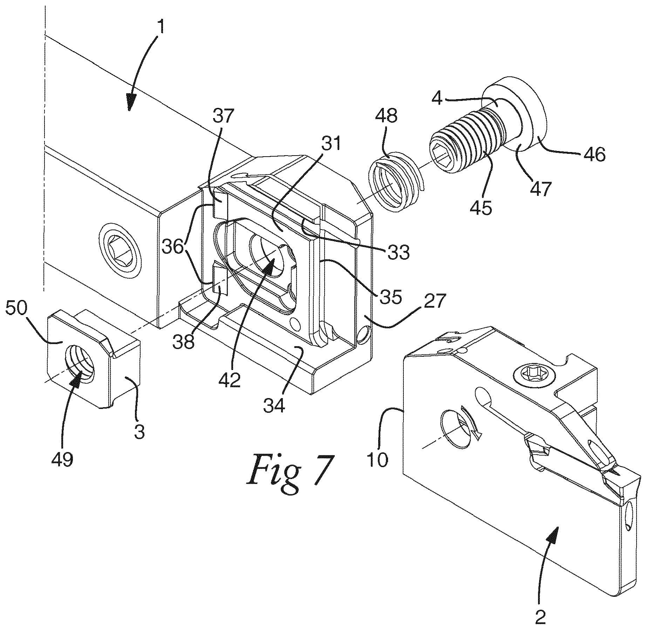

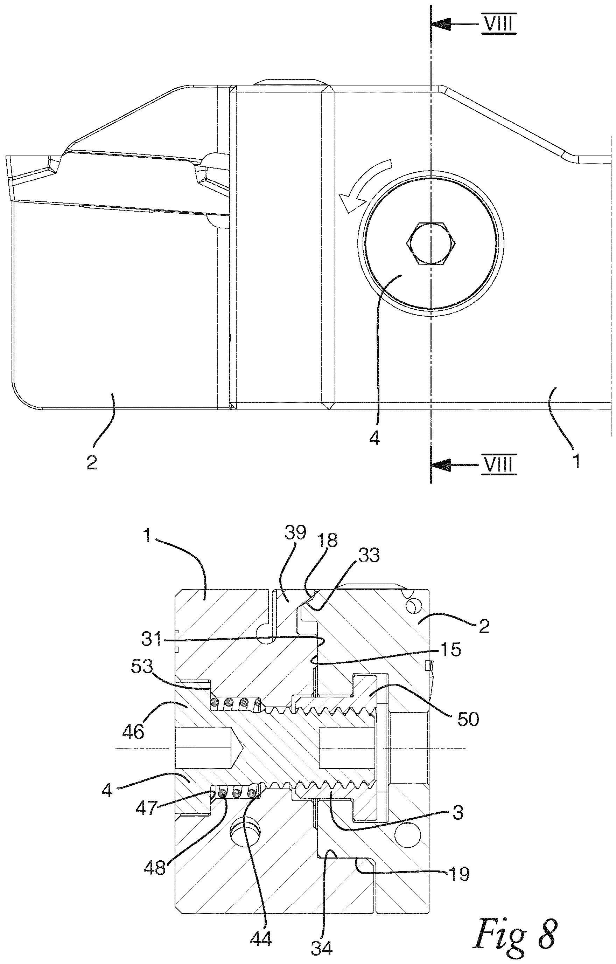

The clamping mechanism, c.f. Figs. 6, 7 and 8, further comprises a through hole 42 in the holder body. The through hole 42 extends from an opening in an outer surface 43 inwards to an opening in the contact surface 31. The through hole 42 has a portion with a largest diameter extending from the outer surface 43 and a portion with a smallest diameter extending from the contact surface 31, c.f. Fig. 8. A middle portion with an intermediate diameter extends between these portions. A first annular shoulder surface 44 facing away from the contact surface toward the opening at the outer surface 43 is formed where the middle portion meets the portion with the smallest diameter. A second annular shoulder surface 53 facing away from the contact surface toward the opening at the outer surface 43 is formed where the middle portion meets the portion with the largest diameter.

The clamping mechanism further comprises a downwardly open top slot 51 in the carrier body, which top slot 51 extends longitudinally forward from an open rear end and behind the top portion 16 of the contact surface 15, and an upwardly open bottom slot 52 extending longitudinally forward from an open rear end and behind the bottom portion 17 of the contact surface 15. The top slot 51 and the bottom slot 52 are open toward the central recess 24. The top slot 51 and the bottom slot 52 form, together with the top cantilever beam 22 and the bottom cantilever beam 23, respectively, an upper and a lower longitudinally extending channel.

The clamping screw 4 comprises an external thread 45 and a protruding head 46.The head 46 has an annular abutment surface 47 facing the threads.

A coil spring 48 is arranged to abut with one end against the first annular shoulder surface 44 and with the other end against the abutment surface 47 of the head 46.

The T-nut comprises a through hole 49 with an internal thread that is configured to mate with the external thread 45 of the clamping screw 4. The T-nut has a square head 50 with upwardly and downwardly protruding flanges. The dimensions of the flanges are designed to slidingly fit in the upper and lower longitudinally channels formed behind the cantilever beams 22, 23 and by the top and bottom slots 51, 52 behind the top and bottom portions 16, 17 of the contact surface 15.

With reference to Figs. 6, 7, 8 and 9 an example method for securing the carrier 2 to the holder 1 of the first embodiment of the turning tool assembly is described.

The through hole 49 of the T-nut 3 is aligned with the through hole 42 of the holder 1. The clamping screw 4 is pushed through the through hole 42 against the force of the coil spring 48 acting on the head 46. The external threads 45 of the clamping screw 4 are brought into engagement with the first turns of the internal threads of the T-nut 3, wherein the T-nut 3 is drawn toward the holder body primary side 29 by the coil spring 48 pushing the clamping screw 4 away from the outer surface 43.

Then the carrier 1 is placed in front of the holder 1, wherein the rear end 10 of the carrier 2 faces the front end 27 of the holder 1. The upwardly and downwardly protruding flanges of the head 50 of the T-nut 3 are inserted in the channels behind the upper and lower cantilever beams 22, 23 of the carrier 2. The carrier is pushed rearward, wherein the flanges slide into and in the top slot 51 and the bottom slot 52 behind the top portion 16 and the bottom portion 17 of the contact surface 15. During this longitudinal rearward movement of the carrier 2, the carrier 2 is guided by the carrier pair of height support surfaces 18, 19 cooperating with the holder pair of height support surfaces 33, 34. As the carrier 2 is pushed further rearward, cooperating longitude support surfaces will engage. The front carrier support part surfaces 21 move in behind the holder front surface 35 and into the undercut below the contact surface 31. At the same time, the respective hook 26 of the top and bottom cantilever beam 22, 23 slides over the contact surface 31 of the holder support structure 30. The top ridge 37 of the holder support structure 30 is aligned with the hook 26 of the top cantilever beam 22, and the bottom ridge 38 of the holder support structure 30 is aligned with the hook 26 of the bottom cantilever beam 23. Eventually, the hooks 26 reach their respective ridge 37, 38 and slide over them. Thereby the rear carrier support part surfaces 20 inside the hooks 26 engage with the rear holder support part surfaces 36 at the rear side of ridges 37, 38 and together form a snap fit.

The carrier 2 has now arrived in a provisionally mounted position at the holder 1. In this position, all resilient members 22, 23, 39 are still in a relaxed state. The carrier 2 is tilted relative the holder 1 in both the height direction (he) and the longitude direction (lo).Therein, the distance between the contact surfaces 15, 31 is smaller at the bottom than at the top, and at the front than at the rear. Due to the protruding flanges of the head 50 of the T-nut 3 in the top slot 51 and bottom slot 52, and due to the T-nut being drawn toward the holder primary side 29, the carrier 2 is loosely held at the holder 1 and prevented from falling off the holder 1 in the lateral direction (la). Furthermore, the carrier 2 is prevented from falling off the holder 1 in the longitudinally forward direction (lo) by the snap fit of hooks 26 with ridges 37, 38. Thus, advantageously, an operator does not need to carefully hold the carrier 2 in place at the holder 1 before starting to tighten the clamping screw 4.

When the carrier 2 is drawn further toward the holder primary side 29 by tightening the clamping screw 4, the contact surfaces 15, 31 are forced together and the positioning surfaces of the carrier support structure 12 abut and slide against the positioning surfaces of the holder support structure 30.

Specifically, the height cantilever beam 39 of the holder support structure 30 resiliently yields and elastically pivots around the living hinge 40 due to the clamping force applied by the top carrier support surface 18 abutting and sliding against the top holder support surface 33, which is a downward facing surface on the flange 41 of the cantilever beam 39. Thereby, the carrier 2 is forced downward and the bottom carrier support surface 19 is pushed against and into contact with the bottom holder support surface 34 such that the carrier 2 assumes the intended clamping position in the height direction (he), c.f. Fig 8. The intended clamping position of the carrier 2 is in the height direction (he) defined by the immovable arranged bottom carrier support surface 19 contacting the immovable arranged bottom holder support surface 34. Thanks to the cooperating bottom support surfaces 19, 34 being fixed, ridged surfaces, during operation, cutting forces acting mainly in the downward height direction (he) are transferred to the holder 1 and are less likely to dislocate the carrier 2 at the holder 1.

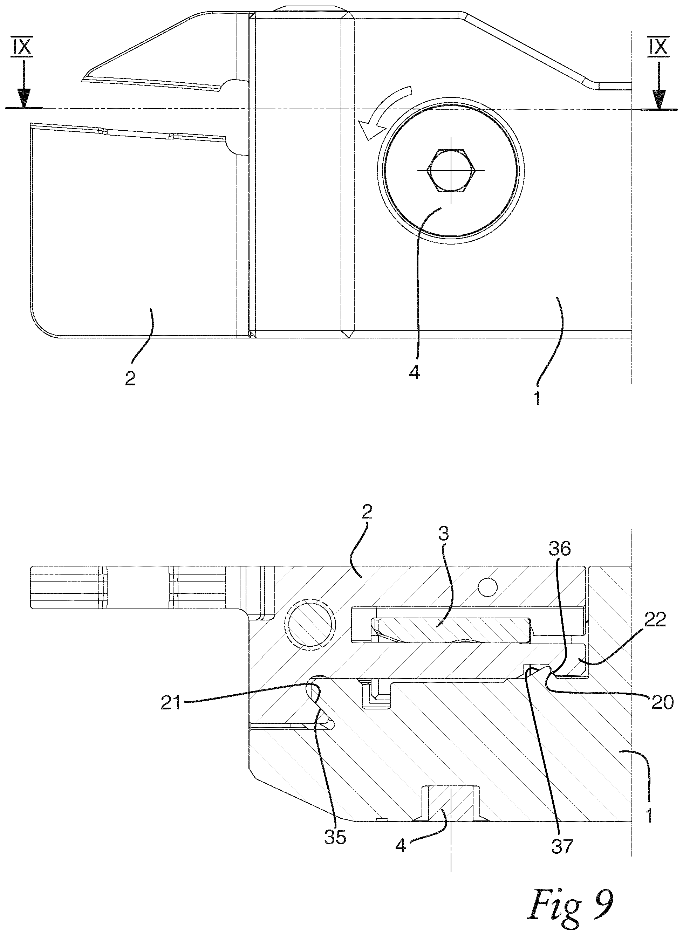

Similarly, the top and bottom cantilever beams 22, 23 resiliently yield and elastically pivot around their respective living hinge 25 due to the clamping force excreted on the rear carrier support part surfaces 20 at the inside of the hooks 26 by the rear holder support part surfaces 36 at the rear side of the ridges 37, 38. As the rear carrier support part surfaces 20 abut and slid against the rear holder support part surfaces 36, the carrier 2 is forced rearward and front carrier support part surfaces 21 are pushed against and into contact with the front holder support surface 35 such that the carrier assumes the intended clamping position in the longitudinal direction (lo), c.f. Fig. 9. The intended clamping position of the carrier 2 in the longitude direction (lo) is defined by the immovable arranged front carrier support part surfaces 21 contacting the front holder support surface 35. Thanks to the cooperating front support surfaces 21, 35 being fixed, ridged surfaces, during operation, a cutting insert is well supported as close as possible at the front end 9. Furthermore, due to the carrier front support part surfaces 21 being received in the undercut and in engagement with the front holder support surface 35 therein, any cutting forces acting in the lateral direction to push the carrier 2 away from the holder 2 at the front end 9, can be transferred to the holder and are less likely to dislocate to dislocate the carrier 2 at the holder 1. Due to the carrier front support surfaces 21 comprising two part surfaces, good contact and alignment with the cooperating front holder support surface 35.

As the claiming screw 4 is further tightened, the contact surface 15, 31 eventually contact. Then, the carrier is removably secured at the holder 1 in the intended clamping position. In this position, the carrier is no longer tilted relative the holder 1 and the contact surfaces 15, 31 are in contact and aligned. All resilient members 22, 23, 39 are in a stressed state.

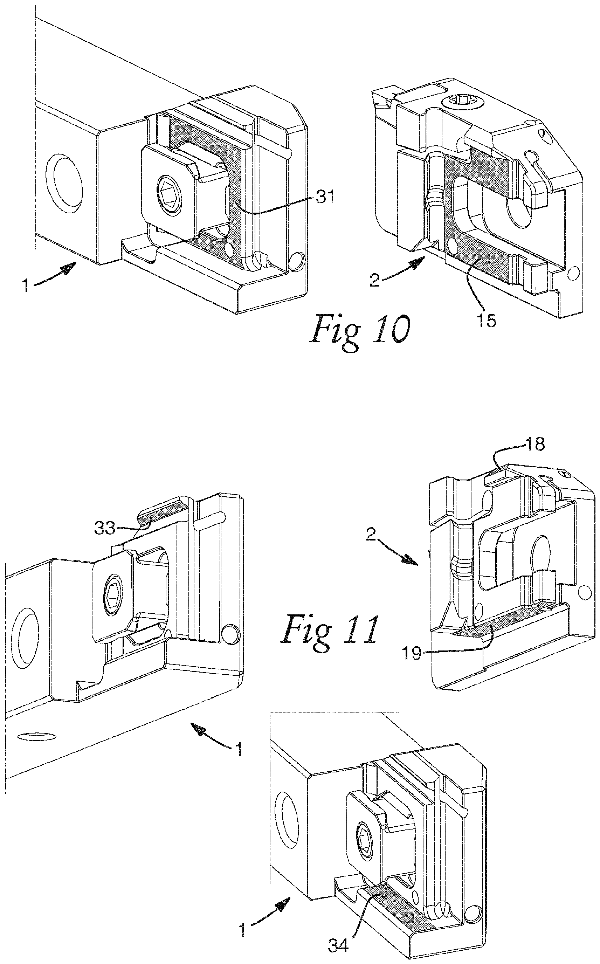

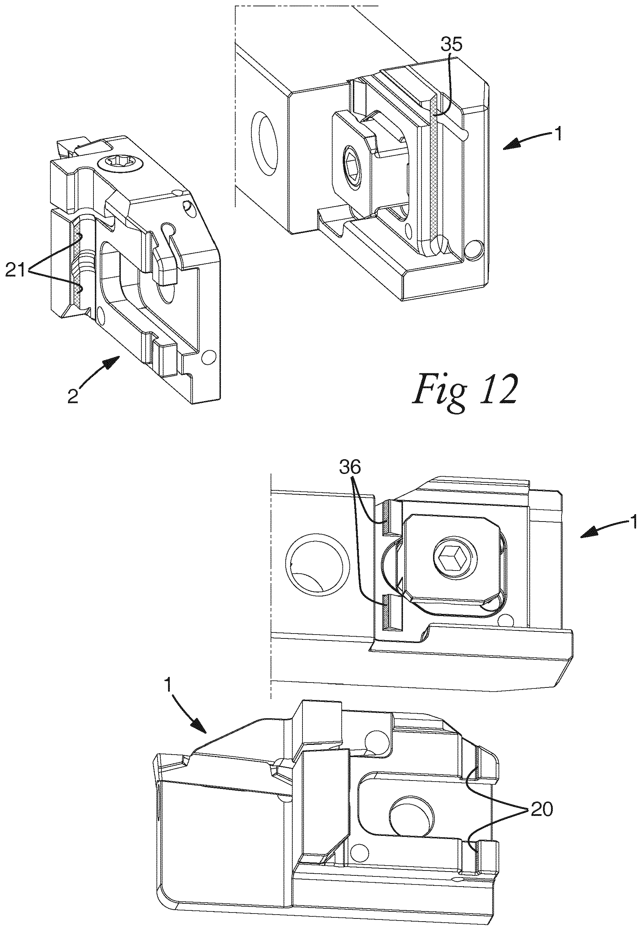

In Fig. 10 - 12 cooperating surfaces in the carrier 2 and the holder 1 are shown. Fig. 10 shows the cooperating contact surfaces 15, 31. Fig. 11 shows the cooperating height support surfaces, i.e. the top carrier support surface 18 that is cooperating with the top holder support surface 33, and the bottom carrier support surface 19 that is cooperating with the bottom holder support surface 34. Fig. 12 shows the cooperating longitude support surfaces, i.e. the rear carrier support surface 20 that is cooperating with the rear holder support surface 36, and the front carrier support surface 21 that is cooperating with front holder support surface 35.

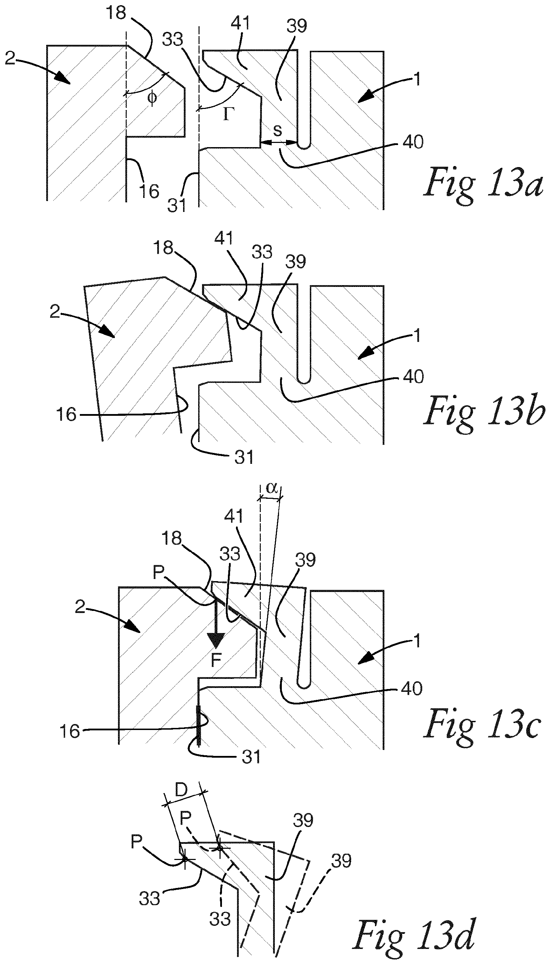

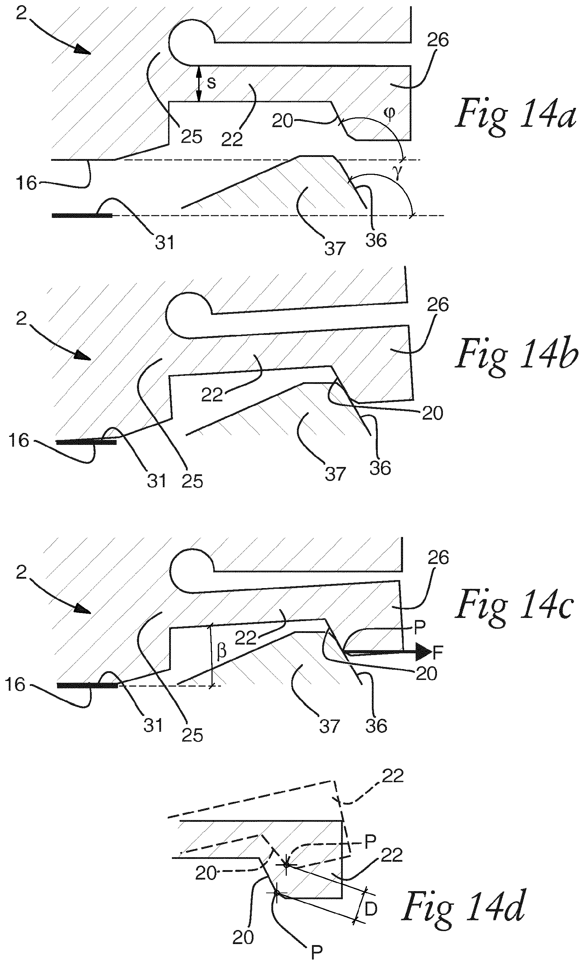

The relaxed and stressed state of the resilient members of the first embodiment are described with reference to schematic Figs. 13 and 14.

Fig. 13a shows in a schematic cross sectional view an upper portion of the carrier 2 and an upper portion of the holder 1. At the carrier 2, the top carrier support surface 18 faces upward and extends laterally outward relative the top portion 16 of the contact surface 15. The top surface forms an angle (Φ) of about 50° with the top portion 16. In other embodiments, the angle (Φ) is about 80 - 45°, preferably about 70 - 50°.

At the holder 1, the height cantilever beam 39 is pivotable around the living hinge 40 which is formed by the proximal long side of the height cantilever beam 39. The thickness (S) of the height cantilever beam 39 at the living hinge 40 is 1mm. In other embodiments, the thickness (S) is about 0,5 - 3mm, preferably about 0,7 - 1,5mm. The top holder support surface 33 is a downward facing surface on the flange 41 at the distal long side. The top holder support surface 33 faces downward and extends laterally inward relative the contact surface 31. The top holder support surface 33 forms an angle (Γ) with the contact surface 31. In the first embodiment, during clamping, the top holder support surface 33 slides over the top carrier support surface 18, why the angle (Γ) is chosen dependent on the angle (Φ). The angle (Γ) is larger than the angle (Φ), and preferably 10° larger. Thus, the angle (Γ) is about 60°. In another embodiment, during clamping, the top carrier support surface 18 slides over the top holder support surface 33, why the angle (Φ) then is instead chosen dependent on the angle (Γ).

Fig. 13b shows the carrier 2 in the provisionally mounted position, wherein the resilient height member in form of the height cantilever beam 39 is in the relaxed state. The carrier 2 is tilted relative the holder 1 in the height direction (he). The top support surfaces 18, 33 are in contact, but the top carrier support surface 18 exerts essentially no force on top holder support surface 33.

Fig. 13c shows the carrier 2 in the intended clamping position at the holder 1. The top carrier support surface 18 has pushed against the top holder support surface 33 and forced the height cantilever beam 39 to pivot an angle (α) of about 4°, wherein the resilient height member in form of the height cantilever beam 39 is in the stressed state. A contact point (P) is located on the support surface 33 and is in contact with a point on the cooperating support surface 18. The carrier 2 is forced downward by a force (F) at the contact point (P). The carrier 2 is no longer tilted relative the holder 1 in the height direction (he) and the top portion 16 of the contact surface 15 is in contact with the contact surface 31.

As can be seen in Fig. 13d, the contact point (P) has been displaced a distance (D) of 0,22mm from the relaxed state.

Fig. 14a shows in a schematic cross sectional view a rear portion of the carrier 2 and the upper ridge 37 and the contact surface 31 of holder 1. At the holder 1, the top part surface of the rear support surface 36 is a rear surface of the ridge 37. The rear surface 36 faces rearwards and extends laterally outward relative the contact surface 31. The rear surface 36 forms an angle (γ) of about 120° with the contact surface 31. In other embodiments, the angle (γ) is about 100 - 135°, preferably about 105 - 130°.

At the carrier 2, the top cantilever beam 22 is pivotable around the living hinge 25 which is formed by the proximal front end of the top cantilever beam 22. The thickness (S) of the top cantilever beam 22 at the living hinge 25 is 1mm. In other embodiments, the thickness (S) is about 0,5 - 3mm, preferably about 0,7 - 1,5mm. The top part surface of the rear surface 20 forms an inside surface of the hook 26 at the distal end of the top cantilever beam 22. The rear surface 20 faces forward and extends laterally inward relative the top portion 16 of the contact surface 15. The rear surface 20 forms an angle (ϕ) with the top portion 16 of contact surface15. In the first embodiment, during clamping, the rear surface 20 slides over the top portion 16 of contact surface15, why the angle (ϕ) is chosen dependent on the angle (γ). The angle (ϕ) is smaller than the angle (γ), and preferably 15° smaller. Thus, the angle (ϕ) is about105°. In another embodiment, during clamping, the top portion 16 of contact surface15 slides over the rear surface 20, why the angle (γ) then is instead chosen dependent on the angle (ϕ).

Fig. 14b shows the carrier 2 in the provisionally mounted position, wherein the resilient top cantilever beam 22 is in the relaxed state. The carrier 2 is tilted relative the holder 1 in the longitude direction (lo). The rear support surfaces 20, 36 are in contact, but the rear holder support surface 36 exerts essentially no force on the rear carrier support surface 20.

Fig. 14c shows the carrier 2 in the intended clamping position at the holder 1. The rear holder support surface 36 has pushed against the rear carrier support surface 20 and forced the top cantilever beam 22 to pivot an angle (β) of about 5,5°, wherein the resilient longitude member in form of the top cantilever beam 22 is in the stressed state. A contact point (P) is located on the support surface 20 and is in contact with a point on the cooperating support surface 36. The carrier 2 is forced rearward by a force (F) at the contact point (P). The carrier 2 is no longer tilted relative the holder 1 in the longitude direction (lo) and the top portion 16 of the contact surface 15 is in contact with the contact surface 31.

As can be seen in Fig. 14d, the contact point (P) has been displaced a distance (D) of 0,18mm from the relaxed state.

## Claims

1. A turning tool assembly for metal cutting, comprising
- a cutting insert carrier (2) comprising a carrier body, which has
- a longitudinal extension from a front end to a rear end, and a cutting insert seat (6) at the front end (9),
- a carrier body lateral side (11), which extends longitudinally forward from a rear end (10) thereof, and
- a carrier support structure (12) arranged in the carrier body lateral side (11) at the rear end (10) thereof,
- a holder (1) comprising a holder body which has
- a holder body primary side (29), which faces and extends longitudinally alongside a portion of the carrier body lateral side (11), wherein the holder body primary side (29) has a front end (27) and extends longitudinally rearward therefrom,
- a holder support structure (30) arranged in the holder primary side (29) at a front end (27) thereof, and
- a clamping mechanism,
wherein
- the carrier support structure (12) comprises
- a contact surface (15), which faces laterally outward from the carrier body lateral side (11), and has an extension in the longitudinal direction (lo) and in a height direction (he),
- positioning surfaces, which each extend at an angle to the contact surface (15), and which
- include a carrier pair of height support surfaces (18, 19) facing in opposite height directions (he),
- the holder support structure (30) comprises
- a contact surface (31), which faces outward from the holder body primary side (29) and has an extension in the longitudinal direction (lo) and in the height direction (he), wherein the contact surface 31 of the holder support structure (30) is aligned with and faces the contact surface (15) of the carrier support structure (12),
- positioning surfaces, which each extend at an angle to the contact surface (31), and which
- include a holder pair of height support surfaces (33, 34) facing in opposite height directions (he), wherein each of the height support surfaces(33, 34) of the holder pair cooperate with and face a respective one of the height support surfaces (18, 19) of the carrier pair,
and wherein
- the clamping mechanism is configured to removably secure the carrier body to the holder body by forcing the contact surface(15) of the carrier support structure (12) against the contact surface (31) of the holder support structure (30), whereby the carrier body is guided toward a clamping position by the positioning surfaces of the carrier support structure (12) abutting and sliding against the positioning surfaces of the holder support structure (30),
**characterized in that**
- the positioning surfaces of the carrier support structure (12) further include a carrier pair of longitude support surfaces (20, 21) facing in opposite longitudinal directions (lo),
- the positioning surfaces of the holder support structure (30) further include a holder pair of longitude support surfaces(35, 36) facing in opposite longitudinal directions (lo), wherein each of the longitude support surfaces (35, 36) of the holder pair cooperate with and face a respective one of the longitude support surfaces (20, 21) of the carrier pair,
- one of the height support surfaces (18, 19, 33, 34) of the carrier pair or the holder pair is located on a resilient height member (39) of the corresponding support structure, whereby the angle and/or position of that height support surface is adjustable by the height member yielding resiliently, and
- one of the longitude support surfaces (20, 21, 35, 36) of the carrier pair or the holder pair is located on a resilient longitude member (22, 23) of the corresponding support structure, whereby the angle and/or position of that longitude support surface is adjustable by the longitude member yielding resiliently.

2. The turning tool assembly for metal cutting according to any claim 1, wherein
- at least one (19) of the height support surfaces of the carrier pair and the therewith cooperating height support surface (34) of the holder pair are immovably arranged in their respective support structure, and wherein
- at least one (21) of the longitude support surfaces of the carrier pair and the therewith cooperating longitude support surface (35) of the holder pair are immovably arranged in their respective support structure.

3. The turning tool assembly for metal cutting according to claim 1 or 2, wherein the support surfaces of each of the pairs are located at opposite sides of their respective contact surface.

4. The turning tool assembly for metal cutting according to claims 2 and 3, wherein
- the carrier pair of height support surfaces comprises of a bottom carrier support surface (19) and a top carrier support surface (18) that face away from each other,
- the holder pair of height support surfaces comprises of a bottom holder support surface (34) and a top holder support surface (33) that face each other, and wherein
- the bottom carrier support surface (19) is the at least one immovably arranged height support surface of the carrier pair, and holder bottom support surface (34) is the therewith cooperating height support surface of the holder pair that is immovably arranged.

5. The turning tool assembly for metal cutting according to claims 2 and 3, or according to claim 4, wherein
- the carrier pair of longitude support surfaces comprises a rear carrier support surface (20) and a front carrier support surface (21) that face each other,
- the holder pair of longitude support surfaces comprises of a rear holder support surface (35) and a front holder support surface (36) that face away from each other, and wherein
- the front carrier support surface (20) is the at least one immovably arranged longitude support surface of the carrier pair, and the front holder support surface (36) is the therewith cooperating longitude support surface of the holder pair that is immovably arranged.

6. The turning tool assembly for metal cutting according to claim 5, wherein
- the front carrier support surface (21) faces rearward and laterally away from the holder primary side,
- the front holder support surface (35) faces forward and laterally away the carrier lateral side,
- the carrier front support surface (21) is slidably arranged and interlocked behind the front holder support surface (35).

7. The turning tool assembly for metal cutting according to any claim 1 - 6, wherein
- each resilient member is in a relaxed state when the cutting insert carrier (2) and the holder (1) are disconnected, and in a stressed state when the cutting insert carrier (2) and the holder are secured together, and wherein,
- when the respective resilient member is in the stressed state, a contact point (P), which is located on the support surface (20, 33) of the respective resilient member and is in contact with a point on the respective cooperating support surface (36, 18), has been displaced a distance (D) of at least 0,05mm and at most 0,6mm from the relaxed state.

8. The turning tool assembly for metal cutting according to any claim 1 - 7, wherein the angle of the support surface (20, 36) that is located on the resilient height member and/or the resilient longitude member is adjustable by the respective resilient member flexing.

9. The turning tool assembly for metal cutting according to claim 7, wherein the resilient height member and/or the resilient longitude member comprise a cantilever beam (22, 23, 39), which is connected to the corresponding support structure in an elastic proximal end forming a living hinge (25, 40), and wherein the corresponding support surface (20, 36) is located at a distal end.

10. The turning tool assembly for metal cutting according to claim 9, wherein the cantilever beam (22, 23) has a hook (26) at the distal end, wherein the corresponding support surface (20) is an inside surface of the hook (26).

11. The turning tool assembly for metal cutting according to claim 10, wherein
- the support surface (36), which is cooperating with the support surface (20) that is the inside surface of the hook (26), is a side surface of a ridge (37, 38) in the thereto corresponding support structure,
- wherein the cantilever beam (22, 23) with the hook (26) and the ridge (37, 38) together form a releasable snap-fit.

12. The turning tool assembly for metal cutting according to any claim 1 - 10, wherein
- only one (33) of the height support surfaces of the carrier pair or the holder pair is located on a resilient height member of the corresponding support structure, and
- only one (20) of the longitude support surfaces of the carrier pair or the holder pair is located on a resilient longitude member of the corresponding support structure.

13. The turning tool assembly for metal cutting according to any claim 1-12, wherein the clamping mechanism comprises a single clamping screw (4).

14. The turning tool assembly for metal cutting according to claim 13, wherein
- the holder body comprises a thorough hole (42) that extends in a transverse direction from an opening in an outer surface (43) of the holder (1) to an opening in the contact surface (31),
- the contact surface (15) of the carrier support structure (12) comprises a top portion (16) and a bottom portion (17), which both extend in a longitudinal direction, and wherein
- the clamping mechanism further comprises
- a downwardly open top slot (51) extending longitudinally forward from an open rear end and behind the top portion (16) of the contact surface (15),
- an upwardly open bottom slot (52) extending longitudinally forward from an open rear end and behind the bottom portion (17) of the contact surface (15), and
- a T-nut (3) slidingly arranged in the top slot (51) and in the bottom slot (52),
wherein
the clamping screw (4) extends through the through hole (42) and the openings, and into the T-nut (3) for threadingly engaging therewith.

15. The turning tool assembly for metal cutting according to claim 14, wherein, when the clamping screw (4) is in a loosened position inside the T-nut (3), the carrier body is operable to move forward, whereby the T-nut (3) slides in the top slot(51) and in the bottom slot (52).

## Patentansprüche

1. Drehwerkzeuganordnung für die Metallzerspanung, die Folgendes aufweist
- einen Schneideinsatzträger (2), der einen Trägerkörper enthält, der Folgendes aufweist
∘ eine Längserstreckung von einem vorderen Ende zu einem hinteren Ende und einen Einsatzsitz (6) an dem vorderen Ende (9),
∘ eine laterale Trägerseite (11), die sich von einem hinteren Ende (10) des Trägerkörpers in Längsrichtung nach vorne erstreckt, und
∘ eine Trägerstützstruktur (12), die in der lateralen Trägerseite (11) am hinteren Ende (10) des Trägerkörpers angeordnet ist,
- einen Halter (1), der einen Halterkörper enthält, der Folgendes aufweist
∘ eine primäre Seite (29) des Halterkörpers, die einem Abschnitt der lateralen Trägerseite (11) des Trägerkörpers zugewandt ist und sich in Längsrichtung entlang dieses Abschnitts erstreckt, wobei die primäre Seite (29) des Halterkörpers ein vorderes Ende (27) aufweist und sich in Längsrichtung von diesem nach hinten erstreckt,
∘ eine Haltersstützstruktur (30), die in der primären Halterseite (29) an einem vorderen Ende (27) davon angeordnet ist, und
- einen Einspannmechanismus,
wobei
- die Trägerstützstruktur (12) Folgendes aufweist
∘ eine Kontaktfläche (15), die von der lateralen Trägerseite (11) seitlich nach außen weist und eine Erstreckung in Längsrichtung (lo) und in einer Höhenrichtung (he) aufweist,
∘ Positionierflächen, die sich jeweils in einem Winkel zur Kontaktfläche (15) erstrecken, und die
▪ ein Trägerpaar von Höhenstützflächen (18, 19) umfassen, die in entgegengesetzte Höhenrichtungen (he) weisen,
- die Halterstützstruktur (30) Folgendes aufweist
o eine Kontaktfläche (31), die von der Primärseite (29) des Halterkörpers nach außen weist und eine Erstreckung in der Längsrichtung (lo) und in der Höhenrichtung (he) aufweist, wobei die Kontaktfläche (31) der Halterstützstruktur (30) mit der Kontaktfläche (15) der Trägerstützstruktur (12) ausgerichtet ist und dieser gegenüberliegt,
o Positionierungsflächen, die sich jeweils in einem Winkel zu der Kontaktfläche (31) erstrecken und die
▪ ein Halterpaar von Höhenstützflächen (33, 34) umfassen, die in entgegengesetzte Höhenrichtungen (he) weisen, wobei jede der Höhenstützflächen (33, 34) des Halterpaares mit einer jeweiligen der Höhenstützflächen (18, 19) des Trägerpaares zusammenwirkt und dieser gegenüberliegt,
und wobei
- der Einspannmechanismus so konfiguriert ist, dass er den Trägerkörper lösbar an dem Halterkörper befestigt, indem er die Kontaktfläche (15) der Trägerstützstruktur (12) gegen die Kontaktfläche (31) der Halterstützstruktur (30) drückt, wodurch der Trägerkörper zu einer eingespannten Position geführt wird, indem die Positionierungsflächen der Trägerstützstruktur (12) an die Positionierungsflächen der Halterstützstruktur (30) anstoßen und an ihnen gleiten,
**dadurch gekennzeichnet, dass**
- die Positionierungsflächen der Trägerstützstruktur (12) ferner ein Paar von Längsstützflächen (20, 21) umfassen, die in entgegengesetzte Längsrichtungen (lo) weisen,
- die Positionierungsflächen der Haltersstützstruktur (30) ferner ein Halterpaar von Längsstützungsflächen (35, 36) umfassen, die in entgegengesetzte Längsrichtungen (lo) weisen, wobei jede der Längsstützungsflächen (35, 36) des Halterpaares mit einer jeweiligen der Längsstützungsflächen (20, 21) des Trägerpaares zusammenwirkt und dieser gegenüberliegt,
- eine der Höhenstützflächen (18, 19, 33, 34) des Trägerpaares oder des Halterpaares auf einem nachgebenden bzw. rückfedernden Höhenteil (39) der entsprechenden Stützstruktur angeordnet ist, wobei der Winkel und/oder die Position dieser Höhenstützfläche durch nachgebendes bzw. rückfederndes Nachgeben des Höhenteils einstellbar ist, und
- eine der Längsstützflächen (20, 21, 35, 36) des Trägerpaares oder des Halterpaares auf einem nachgebenden bzw. rückfedernden Längselement (22, 23) der entsprechenden Stützstruktur angeordnet ist, wobei der Winkel und/oder die Position dieser Längsstützfläche durch das nachgebende bzw. rückfedernde Längselement einstellbar ist.

2. Drehwerkzeuganordnung für die Metallbearbeitung nach Anspruch 1,
wobei
- wenigstens eine (19) der Höhenstützflächen des Trägerpaares und die damit zusammenwirkende Höhenstützfläche (34) des Halterpaares unbeweglich in ihrer jeweiligen Stützstruktur angeordnet sind, und wobei
- wenigstens eine (21) der Längenstützflächen des Trägerpaares und die damit zusammenwirkende Längenstützfläche (35) des Halterpaares in ihrer jeweiligen Stützstruktur unbeweglich angeordnet sind.

3. Drehwerkzeuganordnung für die Metallbearbeitung nach Anspruch 1 oder 2,
wobei die Stützflächen jedes der Paare auf gegenüberliegenden Seiten ihrer jeweiligen Kontaktfläche angeordnet sind.

4. Drehwerkzeuganordnung für die Metallzerspanung nach den Ansprüchen 2 und 3, wobei
- das Trägerpaar der Höhenstützflächen eine untere Trägerstützfläche (19) und eine obere Trägerstützfläche (18) aufweist, die voneinander abgewandt sind,
- das Halterpaar der Höhenstützflächen eine untere Halterstützfläche (34) und eine obere Halterstützfläche (33) enthält, die einander zugewandt sind, und wobei
- die untere Trägerstützfläche (19) die wenigstens eine unbeweglich angeordnete Höhenstützfläche des Trägerpaares ist, und die untere Halterstützfläche (34) die damit zusammenwirkende Höhenstützfläche des Halterpaares ist, die unbeweglich angeordnet ist.

5. Drehwerkzeuganordnung für die Metallzerspanung nach den Ansprüchen 2 und 3 oder nach Anspruch 4, wobei
- das Träger-Längenstützflächenpaar eine hintere Trägerstützfläche (20) und eine vordere Trägerstützfläche (21) aufweist, die einander gegenüberliegen,
- das Halterpaar der Längengradstützflächen eine hintere Halterstützfläche (35) und eine vordere Halterstützfläche (36) aufweist, die einander abgewandt sind, und wobei
- die vordere Trägerstützfläche (20) die wenigstens eine unbeweglich angeordnete Längenstützfläche des Trägerpaares ist und die vordere Halterstützfläche (36) die damit zusammenwirkende Längenstützfläche des Halterpaares ist, die unbeweglich angeordnet ist.

6. Drehwerkzeuganordnung für die Metallbearbeitung nach Anspruch 5, wobei
- die vordere Trägerstützfläche (21) nach hinten und seitlich von der Halter-Primärseite weg weist,
- die vordere Halterstützfläche (35) nach vorne und seitlich von der Trägerseite weg weist,
- die vordere Trägerstützfläche (21) verschiebbar hinter der vorderen Halterstützfläche (35) angeordnet und verriegelt ist.

7. Drehwerkzeuganordnung für die Metallbearbeitung nach einem der Ansprüche 1 bis 6, wobei
- jedes nachgebende bzw. rückfedernde Element sich in einem entspannten Zustand befindet, wenn der Schneideinsatzträger (2) und der Halter (1) voneinander getrennt sind, und sich in einem gespannten Zustand befindet, wenn der Schneideinsatzträger (2) und der Halter aneinander befestigt sind,
und wobei,
- wenn sich das jeweilige nachgebende bzw. rückfedernde Element in dem gespannten Zustand befindet, ein Kontaktpunkt (P), der sich auf der Kontaktfläche (20, 33) des jeweiligen nachgebende bzw. rückfedernden Elements befindet und mit einem Punkt auf der jeweiligen zusammenwirkenden Kontaktfläche (36, 18) in Kontakt steht, um einen Abstand (D) von wenigstens 0,05 mm und höchstens 0,6 mm gegenüber dem entspannten Zustand verschoben wurde.

8. Drehwerkzeuganordnung für die Metallzerspanung nach einem der Ansprüche 1 bis 7, wobei die Neigung der Stützfläche (20, 36), die sich auf dem nachgebenden bzw. rückfedernden Höhenteil und/oder dem nachgebenden bzw. rückfedernden Längenteil befindet, durch die jeweilige Biegung des nachgebenden bzw. rückfedernden Teils einstellbar ist.

9. Drehwerkzeugbaugruppe für die Metallzerspanung nach Anspruch 7, wobei das nachgebende bzw. rückfedernde Höhenteil und/oder das nachgebende bzw. rückfedernde Längsteil einen Ausleger (22, 23, 39) aufweist, der mit der entsprechenden Stützstruktur an einem nachgebenden bzw. rückfedernden proximalen Ende verbunden ist, das ein lebendes Gelenk (25, 40) bildet, und wobei die entsprechende Stützfläche (20, 36) an einem distalen Ende angeordnet ist.

10. Drehwerkzeuganordnung für die Metallzerspanung nach Anspruch 9, wobei der Ausleger (22, 23) am distalen Ende einen Haken (26) aufweist, wobei die entsprechende Stützfläche (20) eine Innenfläche des Hakens (26) ist.

11. Drehwerkzeuganordnung für die Metallbearbeitung nach Anspruch 10, wobei
- die Stützfläche (36), die mit der Stützfläche (20), die die Innenfläche des Hakens (26) ist, zusammenwirkt, eine seitliche Fläche eines Steges (37, 38) in der zugehörigen Stützstruktur ist,
- wobei der Ausleger (22, 23) mit dem Haken (26) und dem Steg (37, 38) zusammen eine lösbare Schnappverbindung bildet.

12. Drehwerkzeuganordnung für die Metallbearbeitung nach einem der Ansprüche 1 bis 10, wobei
- nur eine (33) der Höhenstützflächen des Trägerpaares oder des Halterpaares auf einem federnden Höhenteil der entsprechenden Stützstruktur angeordnet ist, und
- nur eine (20) der Längsstützflächen des Trägerpaares oder des Halterpaares auf einem nachgebenden bzw. rückfedernden Längselement der entsprechenden Stützstruktur angeordnet ist.

13. Drehwerkzeuganordnung für die Metallzerspanung nach einem der Ansprüche 1 bis 12, wobei der Einspannmechanismus eine einzelne Spannschraube (4) aufweist.

14. Drehwerkzeuganordnung für die Metallzerspanung nach Anspruch 13, wobei
- der Halterkörper eine Durchgangsbohrung (42) enthält, die sich in einer Querrichtung von einer Öffnung in einer Außenfläche (43) des Halters (1) zu einer Öffnung in der Kontaktfläche (31) erstreckt,
- die Kontaktfläche (15) der Trägerstützstruktur (12) einen oberen Abschnitt (16) und einen unteren Abschnitt (17) enthält, die sich beide in einer Längsrichtung erstrecken, und wobei
- der Einspannmechanismus ferner folgendes enthält
∘ einen nach unten offenen oberen Schlitz (51), der sich von einem offenen hinteren Ende und hinter dem oberen Abschnitt (16) der Kontaktfläche (15) in Längsrichtung nach vorne erstreckt,
∘ einen nach oben offenen unteren Schlitz (52), der sich in Längsrichtung von einem offenen hinteren Ende und hinter dem unteren Abschnitt (17) der Kontaktfläche (15) nach vorne erstreckt, und
∘ eine T-Mutter (3), die gleitend in dem oberen Schlitz (51) und in dem unteren Schlitz (52) angeordnet ist,
wobei
die Einspannschraube (4) sich durch das Durchgangsloch (42) und die Öffnungen und in die T-Mutter (3) erstreckt, um in Gewindeeingriff mit dieser zu gelangen.

15. Drehwerkzeuganordnung zum Metallschneiden nach Anspruch 14, wobei, wenn die Einspannschraube (4) in einer gelösten Position innerhalb der T-Mutter (3) ist, der Trägerkörper betätigt werden kann, um sich vorwärts zu bewegen, wodurch die T-Mutter (3) in dem oberen Schlitz (51) und in dem unteren Schlitz (52) gleitet.

## Revendications

1. Ensemble d'outil de tournage destiné à la découpe de métal, comprenant
- un support de plaquette de coupe (2) comprenant un corps de support, lequel présente
- une extension longitudinale depuis une extrémité avant vers une extrémité arrière, et un siège de plaquette de coupe (6) au niveau de l'extrémité avant (9),
- un côté latéral de corps de support (11), lequel s'étend longitudinalement vers l'avant depuis une extrémité arrière (10) de celui-ci, et
- une structure d'appui de support (12) agencée dans le côté latéral de corps de support (11) au niveau d'une extrémité arrière (10) de celui-ci,
- un élément de tenue (1) comprenant un corps d'élément de tenue lequel présente
- un côté principal de corps d'élément de tenue (29), lequel est orienté et s'étend longitudinalement le long d'une partie du côté latéral de corps de support (11), où le côté principal de corps d'élément de tenue (29) présente une extrémité avant (27) et s'étend longitudinalement vers l'arrière depuis celle-ci,
- une structure d'appui d'élément de tenue (30) agencée dans le côté principal d'élément de tenue (29) au niveau d'une extrémité avant (27) de celui-ci, et
- un mécanisme de serrage,
où
- la structure d'appui de support (12) comprend
- une surface de contact (15), laquelle est orientée latéralement vers l'extérieur depuis le côté latéral de corps de support (11), et présente une extension dans la direction longitudinale (lo) et dans une direction de hauteur (he),
- des surfaces de positionnement, lesquelles s'étendent chacune à un angle par rapport à la surface de contact (15), et lesquelles
- incluent une paire de support de surfaces d'appui de hauteur (18, 19) orientées dans des directions de hauteur (he) opposées,
- la structure d'appui d'élément de tenue (30) comprend
- une surface de contact (31), laquelle est orientée vers l'extérieur depuis le côté principal de corps d'élément de tenue (29) et présente une extension dans la direction longitudinale (lo) et dans la direction de hauteur (he), où la surface de contact (31) de la structure d'appui d'élément de tenue (30) est alignée avec et fait face à la surface de contact (15) de la structure d'appui de support (12),
- des surfaces de positionnement, lesquelles s'étendent chacune à un angle par rapport à la surface de contact (31), et lesquelles
- incluent une paire d'élément de tenue de surfaces d'appui de hauteur (33, 34) orientées dans des directions de hauteur (he) opposées, où chacune des surfaces d'appui de hauteur (33, 34) de la paire d'élément de tenue coopère avec et fait face à une surface respective des surfaces d'appui de hauteur (18, 19) de la paire de support,
et où
- le mécanisme de serrage est configuré pour fixer de manière détachable le corps de support sur le corps d'élément de tenue en poussant la surface de contact (15) de la structure d'appui de support (12) contre la surface de contact (31) de la structure d'appui d'élément de tenue (30), grâce à quoi le corps de support est guidé vers une position de serrage par les surfaces de positionnement de la structure d'appui de support (12) butant et coulissant contre les surfaces de positionnement de la structure d'appui d'élément de tenue (30),
**caractérisé en ce que**
- les surfaces de positionnement de la structure d'appui de support (12) incluent en outre une paire de support de surfaces d'appui longitudinales (20, 21) orientées dans des directions longitudinales (lo) opposées,
- les surfaces de positionnement de la structure d'appui d'élément de tenue (30) incluent en outre une paire d'élément de tenue de surfaces d'appui longitudinales (35, 36) orientées dans des directions longitudinales (lo) opposées, où chacune des surfaces d'appui longitudinales (35, 36) de la paire d'élément de tenue coopère avec et fait face à une surface respective des surfaces d'appui longitudinales (20, 21) de la paire de support,
- l'une des surfaces d'appui de hauteur (18, 19, 33, 34) de la paire de support ou de la paire d'élément de tenue est située sur un élément de hauteur résilient (39) de la structure d'appui correspondante, grâce à quoi l'angle et/ou la position de cette surface d'appui de hauteur est réglable par l'élément de hauteur agissant de manière résiliente, et
- l'une des surfaces d'appui longitudinales (20, 21, 35, 36) de la paire de support ou de la paire d'élément de tenue est située sur un élément longitudinal résilient (22, 23) de la structure d'appui correspondante, grâce à quoi l'angle et/ou la position de cette surface d'appui longitudinale est réglable par l'élément longitudinal agissant de manière résiliente.

2. Ensemble d'outil de tournage destiné à la découpe de métal selon la revendication 1, dans lequel
- au moins l'une (19) des surfaces d'appui de hauteur de la paire de support et la surface d'appui de hauteur coopérant avec celle-ci (34) de la paire d'élément de tenue sont agencées de manière immobile dans leur structure d'appui respective, et où
- au moins l'une (21) des surfaces d'appui longitudinales de la paire de support et la surface d'appui longitudinale coopérant avec celle-ci (35) de la paire d'élément de tenue sont agencées de manière immobile dans leur structure d'appui respective.

3. Ensemble d'outil de tournage destiné à la découpe de métal selon la revendication 1 ou 2, dans lequel les surfaces d'appui de chacune des paires sont situées au niveau de côtés opposés de leur surface de contact respective.

4. Ensemble d'outil de tournage destiné à la découpe de métal selon les revendications 2 et 3, dans lequel
- la paire de support de surfaces d'appui de hauteur est constituée d'une surface d'appui de support inférieure (19) et d'une surface d'appui de support supérieure (18) qui sont orientées de manière opposée l'une par rapport à l'autre,
- la paire d'élément de tenue de surfaces d'appui de hauteur est constituée d'une surface d'appui d'élément de tenue inférieure (34) et d'une surface d'appui d'élément de tenue supérieure (33) qui sont orientées de manière opposée l'une par rapport à l'autre, et où
- la surface d'appui de support inférieure (19) est la au moins une surface d'appui de hauteur agencée de manière immobile de la paire de support, et la surface d'appui d'élément de tenue inférieure (34) est la surface d'appui de hauteur coopérant avec celle-ci de la paire d'élément de tenue qui est agencée de manière immobile.

5. Ensemble d'outil de tournage destiné à la découpe de métal selon les revendications 2 et 3, ou selon la revendication 4, dans lequel
- la paire de support de surfaces d'appui longitudinales est constituée d'une surface d'appui de support arrière (20) et d'une surface d'appui de support avant (21) qui se font face,
- la paire d'élément de tenue de surfaces d'appui longitudinales est constituée d'une surface d'appui d'élément de tenue arrière (35) et d'une surface d'appui d'élément de tenue avant (36) qui sont orientées de manière opposée l'une par rapport à l'autre, et où
- la surface d'appui de support avant (20) est la au moins une surface d'appui longitudinale agencée de manière immobile de la paire de support, et la surface d'appui d'élément de tenue avant (36) est la surface d'appui longitudinale coopérant avec celle-ci de la paire d'élément de tenue qui est agencée de manière immobile.

6. Ensemble d'outil de tournage destiné à la découpe de métal selon la revendication 5, dans lequel
- la surface d'appui de support avant (21) est orientée vers l'arrière et latéralement vers l'opposé du côté principal d'élément de tenue,
- la surface d'appui d'élément de tenue avant (35) est orientée vers l'avant et latéralement vers l'opposé du côté latéral de support,
- la surface d'appui de support avant (21) est agencée avec possibilité de coulissement et verrouillée derrière la surface d'appui d'élément de tenue avant (35).

7. Ensemble d'outil de tournage destiné à la découpe de métal selon l'une quelconque des revendications 1 à 6, dans lequel
- chaque élément résilient se trouve dans un état non contraint lorsque le support de plaquette de coupe (2) et l'élément de tenue (1) sont non rattachés, et dans un état contraint lorsque le support de plaquette de coupe (2) et l'élément de tenue sont fixés ensemble,
et où
- lorsque l'élément résilient respectif se trouve dans l'état contraint, un point de contact (P), lequel est situé sur la surface d'appui (20, 33) de l'élément résilient respectif et est en contact avec un point sur la surface d'appui coopérante respective (36, 18), a été déplacé d'une distance (D) d'au moins 0,05 mm et d'au plus 0,6 mm par rapport à l'état non contraint.

8. Ensemble d'outil de tournage destiné à la découpe de métal selon l'une quelconque des revendications 1 à 7, dans lequel l'angle de la surface d'appui (20, 36) qui est située sur l'élément de hauteur résilient et/ou l'élément longitudinal résilient est réglable par flexion de l'élément résilient respectif.

9. Ensemble d'outil de tournage destiné à la découpe de métal selon la revendication 7, dans lequel l'élément de hauteur résilient et/ou l'élément longitudinal résilient comprennent une poutre en porte-à-faux (22, 23, 39), laquelle est rattachée à la structure d'appui correspondante dans une extrémité proximale élastique formant une articulation active (25, 40), et où la surface d'appui correspondante (20, 36) est située au niveau d'une extrémité distale.

10. Ensemble d'outil de tournage destiné à la découpe de métal selon la revendication 9, dans lequel la poutre en porte-à-faux (22, 23) présente un crochet (26) au niveau de l'extrémité distale, où la surface d'appui correspondante (20) est une surface intérieure du crochet (26).

11. Ensemble d'outil de tournage destiné à la découpe de métal selon la revendication 10, dans lequel
- la surface d'appui (36), laquelle coopère avec la surface d'appui (20) qui est la surface intérieure du crochet (26), est une surface latérale d'une nervure (37, 38) dans la structure d'appui correspondant à celle-ci,
- où la poutre en porte-à-faux (22, 23) avec le crochet (26) et la nervure (37, 38) forment ensemble un engagement serré libérable.

12. Ensemble d'outil de tournage destiné à la découpe de métal selon l'une quelconque des revendications 1 à 10, dans lequel
- seule l'une (33) des surfaces d'appui de hauteur de la paire de support ou de la paire d'élément de tenue est située sur un élément de hauteur résilient de la structure d'appui correspondante, et
- seule l'une (20) des surfaces d'appui longitudinales de la paire de support ou de la paire d'élément de tenue est située sur un élément longitudinal résilient de la structure d'appui correspondante.

13. Ensemble d'outil de tournage destiné à la découpe de métal selon l'une quelconque des revendications 1 à 12, dans lequel le mécanisme de serrage comprend une unique vis de serrage (4).

14. Ensemble d'outil de tournage destiné à la découpe de métal selon la revendication 13, dans lequel
- le corps d'élément de tenue comprend un trou traversant (42) qui s'étend dans une direction transversale depuis une ouverture dans une surface extérieure (43) de l'élément de tenue (1) jusqu'à une ouverture dans la surface de contact (31),
- la surface de contact (15) de la structure d'appui de support (12) comprend une partie supérieure (16) et une partie inférieure (17), lesquelles s'étendent toutes deux dans une direction longitudinale, et où
- le mécanisme de serrage comprend en outre
- une fente supérieure ouverte vers le bas (51) s'étendant longitudinalement vers l'avant depuis une extrémité arrière ouverte et derrière la partie supérieure (16) de la surface de contact (15),
- une fente inférieure ouverte vers le haut (52) s'étendant longitudinalement vers l'avant depuis une extrémité arrière ouverte et derrière la partie inférieure (17) de la surface de contact (15), et
- un écrou en T (3) agencé avec possibilité de coulissement dans la fente supérieure (51) et dans la fente inférieure (52),
où
la vis de serrage (4) s'étend à travers le trou traversant (42) et les ouvertures, et jusque dans l'écrou en T (3) afin de s'engager par vissage avec celui-ci.

15. Ensemble d'outil de tournage destiné à la découpe de métal selon la revendication 14, dans lequel, lorsque la vis de serrage (4) se trouve dans une position desserrée à l'intérieur de l'écrou en T (3), le corps de support peut être actionné pour être déplacé vers l'avant, grâce à quoi l'écrou en T (3) coulisse dans la fente supérieure (51) et dans la fente inférieure (52).
